# EUROPÄISCHE PATENTSCHRIFT

(11) **EP 4 235 317 B1**
(45) Veröffentlichungstag und Bekanntmachung des Hinweises auf die Patenterteilung: **13.05.2026**
(21) Anmeldenummer: 22159152.2
(22) Anmeldetag: 28.02.2022
(51) Int. Cl.: G05B 13/02, G05B 13/04, G05B 19/418

(54) **VERFAHREN ZUM STEUERN EINER MASCHINE DURCH EINEN LERNBASIER-TEN STEUERUNGSAGENTEN SOWIE STEUEREINRICHTUNG**
METHOD FOR CONTROLLING A MACHINE BY MEANS OF A LEARNING BASED CONTROL AGENT AND CONTROL DEVICE
PROCÉDÉ DE COMMANDE D'UNE MACHINE PAR UN AGENT DE COMMANDE BASÉ SUR L'APPRENTISSAGE, AINSI QUE DISPOSITIF DE COMMANDE

(43) Veröffentlichungstag der Anmeldung: 30.08.2023
(73) Patentinhaber: Siemens Aktiengesellschaft, 80333 München (DE)
(72) Erfinder: Swazinna, Phillip, 85375 Neufahrn (DE); Udluft, Steffen, 82223 Eichenau (DE); Runkler, Thomas, 81929 München (DE)
(74) Vertreter: Siemens Patent Attorneys

(56) Entgegenhaltungen:
- EP-A1- 3 940 596
- US-A1- 2015 370 227

## Beschreibung

Zum Steuern von komplexen technischen Systemen, wie z.B. Robotern, Motoren, Fertigungsanlagen, Energieversorgungseinrichtungen, Gasturbinen, Windturbinen, Dampfturbinen, Fräsmaschinen oder anderen Maschinen werden im zunehmenden Maße datengetriebene Verfahren des maschinellen Lernens, insbesondere Verfahren des bestärkenden Lernens eingesetzt. Hierbei werden Steuerungsagenten, insbesondere künstliche neuronale Netze anhand einer großen Menge von Trainingsdaten darauf trainiert, für einen jeweiligen Zustand des technischen Systems ein hinsichtlich einer vorgegebenen Zielfunktion optimiertes Steuersignal zum Steuern des technischen Systems zu generieren. Ein solcher zum Steuern eines technischen Systems trainierter Steuerungsagent wird häufig auch als Policy oder kurz als Agent bezeichnet.

Durch die Zielfunktion kann insbesondere eine zu optimierende Performanz, z.B. eine Leistung, ein Wirkungsgrad, ein Ressourcenverbrauch, eine Ausbeute, ein Schadstoffausstoß, eine Produktqualität und/oder andere Betriebsparameter des technischen Systems bewertet werden. Eine solche Zielfunktion wird häufig auch als Belohnungsfunktion, Kostenfunktion oder Verlustfunktion bezeichnet.

Mittels eines solchen performanzoptimierenden Steuerungsagenten lässt sich die Performanz eines damit gesteuerten technischen Systems in vielen Fällen signifikant erhöhen. Doch birgt der produktive Einsatz eines solchen Steuerungsagenten auch Risiken, weil die erzeugten Steuersignale häufig nicht erprobt und damit möglicherweise unzuverlässig sind. Dies gilt insbesondere unter Betriebsbedingungen, die von den Trainingsdaten nicht ausreichend abgedeckt sind. Darüber hinaus ist ein Anwender mit einem solcherart optimierten Steuerablauf oft weniger vertraut und kann deshalb seine Expertise weniger gut nutzen, um das korrekte Verhalten des technischen Systems zu überwachen.

EP 3 940 596 A1 offenbart computerimplementiertes Verfahren zum Training eines lernbasierten Steuerungsagenten für ein technisches System, wobei der Steuerungsagent durch das Training zum optimierten Steuern des technischen Systems konfiguriert wird.

US 2015/370227 A1 offenbart ein Verfahren für die Steuerung eines Zielsystems durch eine gewichtete Kombination mehrerer Steuerungsstrategien.

Es ist Aufgabe der vorliegenden Erfindung, ein Verfahren und eine Steuereinrichtung zum Steuern einer Maschine durch einen lernbasierten Steuerungsagenten anzugeben, die ein effizienteres und/oder zuverlässigeres Steuern erlauben.

Gelöst wird diese Aufgabe durch ein Verfahren mit den Merkmalen des Patentanspruchs 1, durch eine Steuereinrichtung mit den Merkmalen des Patentanspruchs 11, durch ein Computerprogrammprodukt mit den Merkmalen des Patentanspruchs 12 sowie durch ein computerlesbares Speichermedium mit den Merkmalen des Patentanspruchs 13.

Zum Steuern einer Maschine mittels eines lernbasierten Steuerungsagenten werden ein Performanzbewerter und ein Aktionsbewerter bereitgestellt. Der Performanzbewerter ermittelt anhand eines Steuersignals eine Performanz für ein Steuern der Maschine mittels des Steuersignals, und der Aktionsbewerter ermittelt anhand des Steuersignals eine Abweichung von einem vorgegebenen Steuerablauf. Weiterhin wird eine Vielzahl von Gewichtswerten zum Gewichten der Performanz gegenüber der Abweichung generiert. Die Gewichtswerte sowie eine Vielzahl von Zustandssignalen werden in den Steuerungsagenten eingespeist, wobei
- ein jeweils resultierendes Ausgabesignal des Steuerungsagenten als Steuersignal in den Performanzbewerter sowie in den Aktionsbewerter eingespeist wird,
- eine vom Performanzbewerter jeweils ermittelte Performanz gegenüber einer vom Aktionsbewerter jeweils ermittelten Abweichung gemäß dem jeweiligen Gewichtswert durch eine Zielfunktion gewichtet wird, und
- der Steuerungsagent darauf trainiert wird, anhand eines Zustandssignals und eines Gewichtswerts ein die Zielfunktion optimierendes Steuersignal auszugeben. Zum Steuern der Maschine werden dann ein Betriebs-Gewichtswert und ein Betriebs-Zustandssignal der Maschine in den trainierten Steuerungsagenten eingespeist und ein resultierendes Ausgabesignal des trainierten Steuerungsagenten der Maschine zugeführt. Beim Steuern der Maschine wird der Gewichtswert sukzessive derart verändert, dass die Performanz gegenüber der Abweichung in zunehmendem Maße höher gewichtet wird.

Zum Ausführen des erfindungsgemäßen Verfahrens sind eine entsprechende Steuereinrichtung, ein Computerprogrammprodukt sowie ein computerlesbares, vorzugsweise nichtflüchtiges Speichermedium vorgesehen.

Das erfindungsgemäße Verfahren sowie die erfindungsgemäße Steuereinrichtung können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass durch einfache Eingabe bzw. Änderung eines Betriebs-Gewichtswerts im laufenden Betrieb der Maschine M verschiedene Steuerstrategien eingestellt werden können, die für unterschiedliche Gewichtungen einer Performanz gegenüber einer Abweichung von einem vorgegebenen Steuerablauf optimiert sind. Auf diese Weise kann der trainierte Steuerungsagent im laufenden Betrieb zeitweise darauf eingestellt werden, eine Nähe zum vorgegebenen Steuerablauf höher zu gewichten als die Performanz der Maschine. Dies kann insbesondere während sicherheitskritischer Betriebsphasen der Maschine vorteilhaft sein. In weniger kritischen Betriebsphasen kann dagegen die Performanz höher gewichtet werden als die Nähe zum vorgegebenen Steuerablauf, um die Performanzoptimierung entsprechend zu begünstigen.

Insbesondere kann zu Beginn einer Steuerung, beispielsweise bei einer Inbetriebnahme des trainierten Steuerungsagenten oder der Maschine, zunächst die Abweichung vom vorgegebenen Steuerablauf höher gewichtet werden als die Performanz. Auf diese Weise kann ein Betriebsrisiko durch nicht erprobte Steuerabläufe verringert werden. Sofern und insoweit sich die Steuerabläufe dann als zuverlässig erweisen, kann die Performanzoptimierung schrittweise favorisiert und so die Performanz in der Regel erhöht werden.

Vorteilhafte Ausführungsformen und Weiterbildungen der Erfindung sind in den abhängigen Ansprüchen angegeben.

Nach einer weiteren vorteilhaften Ausführungsform der Erfindung kann die Ermittlung einer jeweiligen Performanz durch den Performanzbewerter und/oder die Ermittlung einer jeweiligen Abweichung durch den Aktionsbewerter anhand eines jeweiligen Zustandssignals erfolgen. Die zusätzliche Berücksichtigung eines Zustandssignals erlaubt in vielen Fällen, die jeweilige Performanz und/oder die jeweilige Abweichung genauer zu ermitteln.

Weiterhin kann für eine Vielzahl von Zustandssignalen und Steuersignalen jeweils ein Performanzwert eingelesen werden, der eine aus Anwendung eines jeweiligen Steuersignals auf einen durch ein jeweiliges Zustandssignal spezifizierten Zustand der Maschine resultierende Performanz quantifiziert. Der Performanzbewerter kann dann darauf trainiert werden, anhand eines Zustandssignals und eines Steuersignals einen zugehörigen Performanzwert zu reproduzieren. Auf diese Weise kann ein Performanzbewerter durch Verfahren des maschinellen Lernens, insbesondere des überwachten Lernens realisiert werden.

Darüber hinaus kann der Performanzbewerter mittels eines Q-learning-Verfahrens und/oder eines anderen Q-Funktionsbasierten Verfahrens des bestärkenden Lernens darauf trainiert werden, eine über einen zukünftigen Zeitraum kumulierte Performanz zu ermitteln. Zur Durchführung von Q-Learning-Verfahren und Q-Funktionsbasierten Verfahren steht eine Vielzahl von effizienten numerischen Optimierungsverfahren zur Verfügung.

Nach einer weiteren vorteilhaften Ausführungsform der Erfindung kann eine Vielzahl von Zustandssignalen und Steuersignalen eingelesen werden. Der Aktionsbewerter kann dann darauf trainiert werden, anhand eines Zustandssignals und eines Steuersignals nach einer Informationsreduktion das Steuersignal zu reproduzieren, wobei ein Reproduktionsfehler ermittelt wird. Die Abweichung kann dann anhand des Reproduktionsfehlers ermittelt werden. Dem vorstehenden Merkmal liegt die Beobachtung zugrunde, dass Reproduktionsfehler in von Trainingsdaten gut abgedeckten Zustands- und Steueraktionsbereichen häufig kleiner sind als in schlecht abgedeckten Bereichen. Somit kann der Reproduktionsfehler in der Regel als Maß dafür aufgefasst werden, inwieweit eine jeweilige zustandsspezifische Steueraktion durch die Trainingsdaten abgedeckt ist. Insofern die Trainingsdaten in vielen Fällen auf einem vorgegebenen Steuerablauf basieren, kann der Reproduktionsfehler als verhältnismäßig genaues Maß für die Abweichung vom vorgegebenen Steuerablauf verwendet werden.

Vorzugsweise kann die Abweichung durch den Aktionsbewerter mittels eines variationalen Autoencoders, mittels eines Autoencoders, mittels generativer gegnerischer Netze und/oder durch einen insbesondere zustandssignalabhängigen Vergleich mit vorgegebenen Steuersignalen ermittelt werden. Durch Verwendung eines Autoencoders oder insbesondere eines variationalen Autoencoders kann eine informationsreduzierte und/oder weniger redundante Darstellung von eingespeisten Zustandssignalen und/oder Steuersignalen ermittelt werden. Darüber hinaus kann auf einfache Weise ein Maß dafür ermittelt werden, wie präzise sich insbesondere die Steuersignale aus den reduzierten Größen wieder rekonstruieren lassen. Wie oben bereits angedeutet, kann eine Reproduzierbarkeit von Steuersignalen als Maß für die Abweichung von einem vorgegebenen Steuerablauf verwendet werden.

Ferner kann zum Training des Steuerungsagenten, des Performanzbewerters und/oder des Aktionsbewerters vorzugweise ein gradientenbasiertes Optimierungsverfahren, z.B. ein Gradientabstiegsverfahren, ein stochastisches Optimierungsverfahren, eine Partikelschwarmoptimierung und/oder ein genetisches Optimierungsverfahren verwendet werden. Für die genannten Verfahren steht eine Vielzahl effizienter Implementierungen zu Verfügung.

Ein Ausführungsbeispiel der Erfindung wird nachfolgend anhand der Zeichnung näher erläutert. Dabei veranschaulichen jeweils in schematischer Darstellung:
- Figur 1: eine erfindungsgemäße Steuereinrichtung beim Steuern einer Maschine,
- Figur 2: ein Training eines Transitionsmodells zur Performanzermittlung,
- Figur 3: ein Training eines Aktionsbewerters, und
- Figur 4: ein Training eines Steuerungsagenten der Steuereinrichtung.

Insofern in verschiedenen Figuren gleiche oder korrespondierende Bezugszeichen verwendet werden, bezeichnen diese Bezugszeichen die gleichen oder korrespondierende Entitäten, die insbesondere wie in Zusammenhang mit der betreffenden Figur beschrieben, implementiert oder ausgestaltet sein können.

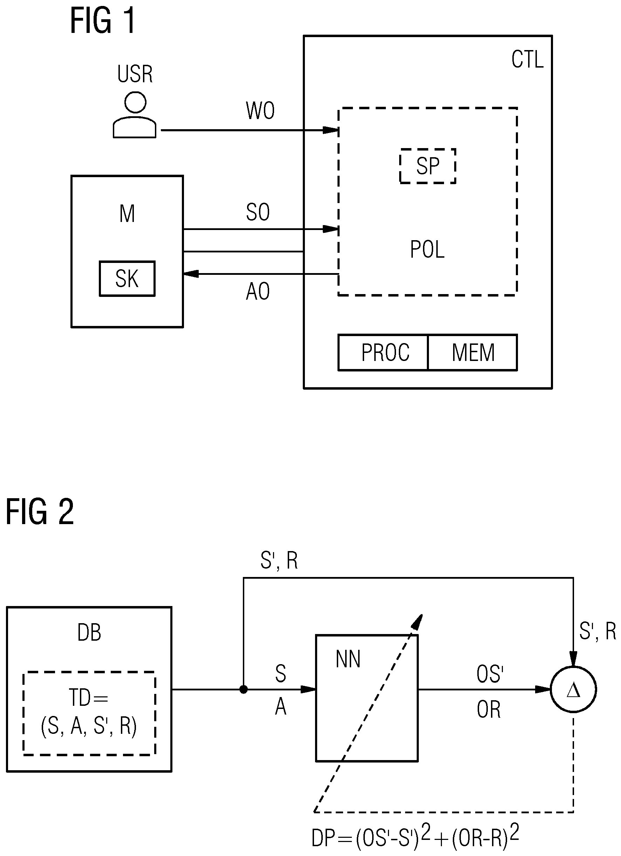

Figur 1 veranschaulicht eine erfindungsgemäße Steuereinrichtung CTL beim Steuern einer Maschine M, z.B. eines Roboters, eines Motors, einer Fertigungsanlage, einer Fabrik, einer Energieversorgungseinrichtung, einer Gasturbine, einer Windturbine, einer Dampfturbine, einer Fräsmaschine oder eines anderen Geräts oder einer anderen Anlage. Insbesondere kann auch eine Komponente oder ein Teilsystem einer Maschine oder einer Anlage als Maschine M aufgefasst werden.

Die Maschine M verfügt über eine Sensorik SK zum vorzugsweise fortlaufenden Erfassen und/oder Messen von Systemzuständen oder Teilsystemzuständen der Maschine M.

Die Steuereinrichtung CTL ist in Figur 1 extern zur Maschine M dargestellt und mit dieser gekoppelt. Alternativ kann die Steuereinrichtung CTL auch ganz oder teilweise in die Maschine M integriert sein.

Die Steuereinrichtung CTL verfügt über einen oder mehrere Prozessoren PROC zum Ausführen von Verfahrensschritten der Steuereinrichtung CTL sowie über einen oder mehrere mit dem Prozessor PROC gekoppelte Speicher MEM zum Speichern der von der Steuereinrichtung CTL zu verarbeitenden Daten.

Weiterhin weist die Steuereinrichtung CTL einen lernbasierten Steuerungsagenten POL auf, der durch Verfahren des bestärkenden Lernens trainiert oder trainierbar ist. Ein solcher Steuerungsagent wird häufig auch als Policy oder kurz als Agent bezeichnet. Im vorliegenden Ausführungsbeispiel ist der Steuerungsagent POL als künstliches neuronales Netz implementiert.

Der Steuerungsagent POL und damit die Steuereinrichtung CTL werden vorab anhand von vorgegebenen Trainingsdaten datengetrieben trainiert und so zum optimierten Steuern der Maschine M konfiguriert. Optional kann der Steuerungsagent POL auch während des Betriebs der Maschine M weitertrainiert werden, wobei Zustandssignale, Steuersignale und/oder Performanzdaten der im laufenden Betrieb befindlichen Maschine M als Trainingsdaten verwendet werden können.

Das Training des Steuerungsagenten POL zielt insbesondere auf zwei Steuerkriterien ab. So soll die vom Steuerungsagenten POL gesteuerte Maschine M einerseits eine möglichst hohe Performanz erzielen, während andererseits die Steuerung nicht zu sehr von einem vorgegebenen Steuerablauf SP abweichen sollte.

Die Performanz kann hierbei z.B. eine Leistung, einen Wirkungsgrad, einen Ressourcenverbrauch, eine Ausbeute, einen Schadstoffausstoß, eine Produktqualität und/oder andere Betriebsparameter der Maschine M betreffen.

Ein vorgegebener Steuerablauf SP kann beispielweise durch vorgegebene Sequenzen von Zuständen und/oder Steueraktionen spezifiziert werden. Darüber hinaus kann ein vorgegebener Steuerablauf SP beim Training auch insofern berücksichtigt werden, als die Trainingsdaten von der Maschine M, einer dazu ähnlichen Maschine oder einer Simulation der Maschine M stammen, während diese von einem Referenz-Steuerungsagenten gesteuert wurde. In diesem Fall kann eine Abdeckung der von der Maschine M bei Steuerung durch den Steuerungsagenten POL durchlaufenen Zustände und/oder Steueraktionen durch die Trainingsdaten als Kriterium für eine Nähe der Steuerung zum Referenz-Steuerungsagenten und damit zum vorgegebenen Steuerablauf SP dienen. Als Referenz-Steuerungsagent kann vorzugsweise ein überprüfter, validierter und/oder regelbasierter Steuerungsagent verwendet werden.

Erfindungsgemäß soll der Steuerungsagent POL derart trainiert werden, dass eine relative Gewichtung der beiden Optimierungskriterien Performanz und Nähe zum vorgegebenen Steuerablauf SP durch einen Gewichtswert im laufenden Betrieb des trainierten Steuerungsagenten POL verändert werden kann. Ein Ablauf dieses Trainings wird unten näher erläutert.

Zum optimierten Steuern der Maschine M durch den trainierten Steuerungsagenten POL werden Betriebs-Zustandssignale SO, d.h. im laufenden Betrieb der Maschine M ermittelte Zustandssignale zur Steuereinrichtung CTL übermittelt. Die Betriebs-Zustandssignale SO spezifizieren jeweils einen Zustand, insbesondere einen Betriebszustand der Maschine M und werden vorzugsweise jeweils durch einen numerischen Zustandsvektor oder eine Zeitreihe von Zustandswerten oder Zustandsvektoren dargestellt.

Durch die Betriebs-Zustandssignale SO können Messdaten, Sensordaten, Umgebungsdaten oder andere im Betrieb der Maschine M anfallende oder den Betrieb beeinflussende Daten dargestellt werden. Beispielsweise Daten über eine Temperatur, einen Druck, eine Einstellung, eine Aktorstellung, eine Ventilposition, eine Schadstoffemission, eine Auslastung, einen Ressourcenverbrauch und/oder eine Leistung der Maschine M oder ihrer Komponenten. Bei einer Produktionsanlage können die Betriebs-Zustandssignale SO auch eine Produktqualität oder eine andere Produkteigenschaft betreffen. Die Betriebs-Zustandssignale SO können zumindest teilweise durch die Sensorik SK gemessen oder mittels eines Simulators der Maschine M simulativ ermittelt werden.

Weiterhin wird durch die Steuereinrichtung CTL ein Betriebs-Gewichtswert WO, z.B. von einem Benutzer USR der Maschine M eingelesen. Durch den Betriebs-Gewichtswert WO wird die Performanz der Maschine M gegenüber einer Abweichung der vom Steuerungsagenten POL gesteuerten Maschine M vom vorgegebenen Steuerablauf SP gewichtet. Alternativ dazu kann der Betriebs-Gewichtswert WO auch von der Steuereinrichtung CTL abhängig von einer Betriebsbedingung oder Betriebsphase der Maschine M erzeugt werden.

Die zur Steuereinrichtung CTL übermittelten Betriebs-Zustandssignale SO werden zusammen mit dem Betriebs-Gewichtswert WO in den trainierten Steuerungsagenten POL als Eingabesignale eingespeist. Anhand eines jeweils zugeführten Betriebs-Zustandssignals SO und Betriebs-Gewichtswerts WO generiert der trainierte Steuerungsagent POL ein jeweiliges optimiertes Betriebs-Steuersignal AO. Letzteres spezifiziert hierbei eine oder mehrere an der Maschine M vornehmbare Steueraktionen. Die generierten Betriebs-Steuersignale AO werden vom Steuerungsagenten POL bzw. von der Steuereinrichtung CTL zur Maschine M übermittelt. Durch die übermittelten Betriebs-Steuersignale AO wird die Maschine M in optimierter Weise gesteuert, indem die durch die Betriebs-Steuersignale AO spezifizierten Steueraktionen durch die Maschine M ausgeführt werden.

Durch den Betriebs-Gewichtswert WO kann der trainierte Steuerungsagent POL im laufenden Betrieb der Maschine M zeitweise darauf eingestellt werden, bei der Ermittlung von optimierten Betriebs-Steuersignalen AO eine Nähe zum vorgegebenen Steuerablauf SP höher zu gewichten als die Performanz der Maschine M. Dies kann insbesondere während sicherheitskritischer Betriebsphasen der Maschine M vorteilhaft sein. In weniger kritischen Betriebsphasen kann dagegen die Performanz höher gewichtet werden als die Nähe zum vorgegebenen Steuerablauf SP, um die Performanzoptimierung entsprechend zu begünstigen.

Insbesondere kann zu Beginn einer Steuerung, beispielsweise bei einer Inbetriebnahme des trainierten Steuerungsagenten POL oder der Maschine M, zunächst die Nähe zum vorgegebenen Steuerablauf SP höher gewichtet werden als die Performanz. Auf diese Weise kann ein Betriebsrisiko durch nicht erprobte Steuerabläufe verringert werden. Sofern und insoweit sich die Steuerabläufe dann als zuverlässig erweisen, kann die Performanzoptimierung schrittweise favorisiert und so die Performanz in der Regel erhöht werden.

Figur 2 veranschaulicht ein Training eines Transitionsmodells NN zur Ermittlung einer Performanz der Maschine M. Das Transitionsmodell NN ist Teil eines Performanzbewerters PEV, der unten näher erläutert wird.

Das Transitionsmodell NN ist datengetrieben trainierbar und soll einen Zustandsübergang bei Anwendung einer Steueraktion auf einen vorgegebenen Zustand der Maschine M modellieren. Ein solches Transitionsmodell wird häufig auch als Dynamikmodell oder Systemmodell bezeichnet. Das Transitionsmodell NN kann in der Steuereinrichtung CTL oder ganz oder teilweise extern dazu implementiert sein. Im vorliegenden Ausführungsbeispiel ist das Transitionsmodell NN als künstliches neuronales Netz implementiert.

Das Transitionsmodell NN soll anhand von in einer Datenbank DB enthaltenen Trainingsdatensätzen TD darauf trainiert werden, anhand eines jeweiligen Zustands und einer jeweiligen Steueraktion einen aus Anwendung der Steueraktion resultierenden Folgezustand der Maschine M sowie einen daraus resultierenden Performanzwert möglichst genau vorherzusagen.

Im vorliegenden Ausführungsbeispiel stammen die Trainingsdatensätze TD von einer Steuerung der Maschine M, einer dazu ähnlichen Maschine oder einer Simulation der Maschine M durch einen Referenz-Steuerungsagenten. Wie oben schon angedeutet, dienen die durch den Referenz-Steuerungsagenten durchgeführten Steuervorgänge unter anderem dazu, einen vorgegebenen, sich in den Trainingsdatensätzen TD niederschlagenden Steuerablauf SP zu spezifizieren.

Die Trainingsdatensätze TD umfassen jeweils ein Zustandssignal S, ein Steuersignal A, ein Folgezustandssignal S` sowie einen Performanzwert R. Wie oben bereits erwähnt, spezifizieren die Zustandssignale S jeweils einen Zustand der Maschine M und die Steuersignale A jeweils eine an der Maschine M vornehmbare Steueraktion. Entsprechend wird durch ein jeweiliges Folgezustandssignal S` ein aus Anwendung der jeweiligen Steueraktion auf den jeweiligen Zustand resultierender Folgezustand der Maschine M spezifiziert. Insbesondere können durch ein Zustandssignal S und ein Folgezustandssignal S' die gleichen Betriebsdaten der Maschine M spezifiziert werden wie durch die oben erwähnten Betriebs-Zustandssignale SO. Der jeweils zugehörige Performanzwert R quantifiziert schließlich eine jeweilige Performanz einer Ausführung der jeweiligen Steueraktion im jeweiligen Zustand. Der Performanzwert R kann hierbei insbesondere eine aktuell resultierende Leistung, einen aktuell resultierenden Wirkungsgrad, einen aktuell resultierenden Ressourcenverbrauch, eine aktuell resultierende Ausbeute, einen aktuell resultierenden Schadstoffausstoß, eine aktuell resultierende Produktqualität und/oder andere aus einer Vornahme der aktuellen Steueraktion resultierende Betriebsparameter der Maschine M betreffen. Ein solcher Performanzwert wird im Zusammenhang des maschinellen Lernens auch mit den Begriffen Belohnung, Reward oder **--** komplementär dazu - Kosten oder Loss bezeichnet.

Zum Training des Transitionsmodells NN werden dem Transitionsmodell NN Zustandssignale S sowie Steuersignale A als Eingabesignale zugeführt. Das Transitionsmodell NN soll so trainiert werden, dass dessen Ausgabesignale einen jeweils resultierenden Folgezustand sowie einen jeweils resultierenden Performanzwert möglichst genau reproduzieren. Das Training erfolgt vorzugsweise mittels eines Verfahrens des überwachten maschinellen Lernens.

Unter einem Training sei hierbei allgemein eine Optimierung einer Abbildung von Eingabesignalen, hier S und A eines Maschinenlernmodells, hier NN, auf dessen Ausgabesignale verstanden. Diese Abbildung wird nach vorgegebenen, gelernten und/oder zu lernenden Kriterien während einer Trainingsphase optimiert. Als Kriterien können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar. Unter einem Optimieren sei dabei stets auch eine Annäherung an ein Optimum verstanden.

Trainieren lassen sich insbesondere künstliche neuronale Netze, rekurrente neuronale Netze, faltende neuronale Netze, Perzeptrone, bayessche neuronale Netze, Autoencoder, variationale Autoencoder, Deep-Learning-Architekturen, Support-Vektor-Maschinen, datengetriebene Regressionsmodelle, k-nächste-Nachbarn-Klassifikatoren, physikalische Modelle oder Entscheidungsbäume.

Im Fall des Transitionsmodells NN werden diesem - wie oben schon erwähnt - Zustandssignale S sowie Steuersignale A aus den Trainingsdaten als Eingabesignale zugeführt. Zu einem jeweiligen ein Zustandssignal S und ein Steuersignal A umfassenden Eingabedatensatz (S, A) werden durch das Transitionsmodell NN ein Ausgabesignal OS` als Folgezustandssignal sowie ein Ausgabesignal OR als Performanzwert ausgegeben.

Durch das Training des Transitionsmodells NN wird angestrebt, dass die Ausgabesignale OS' mit den tatsächlichen Folgezustandssignalen S` sowie die Ausgabesignale OR mit den tatsächlichen Performanzwerten R zumindest im Mittel möglichst gut übereinstimmen. Zu diesem Zweck wird eine Abweichung DP zwischen einem jeweiligen Ausgabesignalpaar (OS', OR) und dem jeweils korrespondierenden, in den Trainingsdaten enthaltenen Paar (S', R) ermittelt. Die Abweichung DP repräsentiert hierbei einen Prädiktionsfehler des Transitionsmodells NN. Die Abweichung DP kann beispielsweise durch Berechnung eines euklidischen Abstands zwischen den jeweils darstellenden Vektoren ermittelt werden, z. B. gemäß DP = (OS`- S')² + (OR-R) ².

Die Abweichung DP wird, wie in Figur 2 durch einen strichlierten Pfeil angedeutet, zum Transitionsmodell NN zurückgeführt. Anhand der zurückgeführten Abweichung DP wird das Transitionsmodell NN darauf trainiert, diese Abweichung DP und damit den Prädiktionsfehler zumindest im Mittel zu minimieren. Zur Minimierung der Abweichung DP ist eine Vielzahl von effizienten Optimierungsverfahren verfügbar, z.B. gradientenbasierte Optimierungsverfahren, stochastische Gradientenabstiegsverfahren, Partikelschwarmoptimierungen und/oder genetische Optimierungsverfahren. Durch die Minimierung der Abweichung DP wird das Transitionsmodell NN darauf trainiert, zu einem vorgegebenen Zustand und einer vorgegebenen Steueraktion einen resultierenden Folgezustand sowie einen resultierenden Performanzwert möglichst gut vorherzusagen.

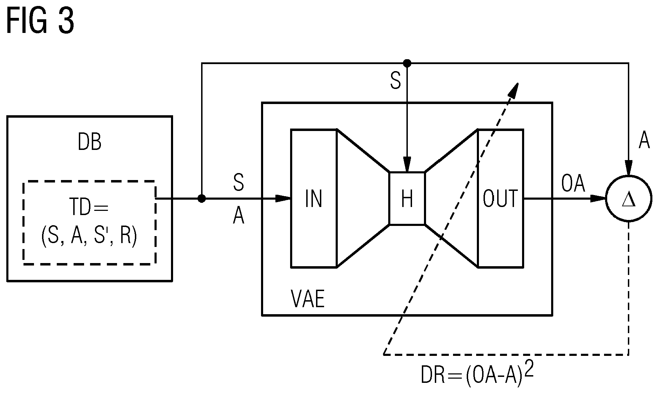

Figur 3 veranschaulicht ein datengetriebenes Training eines Aktionsbewerters VAE. Der Aktionsbewerter VAE kann in der Steuereinrichtung CTL oder ganz oder teilweise extern dazu implementiert sein.

Der Aktionsbewerter VAE dient zum Ermitteln einer Abweichung einer Steuerung von einem vorgegebenen Steuerablauf SP und ist im vorliegenden Ausführungsbeispiel durch einen variationalen Autoencoder implementiert. Wie oben schon erwähnt, wird der vorgegebene Steuerablauf SP durch die mittels des Referenz-Steuerungsagenten gewonnenen Trainingsdaten gewissermaßen definiert.

Im vorliegenden Ausführungsbeispiel dient der variationale Autoencoder VAE dazu, eine jeweilige zustandsspezifische Steueraktion hinsichtlich ihrer Reproduzierbarkeit zu bewerten. Diese Reproduzierbarkeit erweist sich als verhältnismä-βig genaues Maß für eine Ähnlichkeit einer jeweiligen zustandsspezifischen Steueraktion zu den in den Trainingsdaten vorliegenden Steueraktionen bzw. als Maß für eine Wahrscheinlichkeit in den Trainingsdaten vorzukommen.

Der variationale Autoencoder VAE ist im vorliegenden Ausführungsbeispiel als feed-forward neuronales Netz implementiert und umfasst eine Eingabeschicht IN, eine verdeckte Schicht H sowie eine Ausgabeschicht OUT. Neben der verdeckten Schicht H kann der variationale Autoencoder VAE weitere verdeckte Schichten aufweisen. Kennzeichnend für einen Autoencoder ist, dass die verdeckte Schicht H signifikant kleiner ist, d.h. weniger Neuronen aufweist als die Eingabeschicht IN oder die Ausgabeschicht OUT.

Der variationale Autoencoder VAE soll anhand von aus der Datenbank DB eingelesenen Trainingsdatensätzen TD darauf trainiert werden, anhand von eingespeisten Zustandssignalen S und Steuersignalen A - nach einer durch die kleinere verdeckte Schicht H bedingten Informationsreduktion - die eingespeisten Steuersignale A zumindest im Mittel möglichst genau zu reproduzieren. Dabei soll insbesondere auch ein Reproduktionsfehler DR ermittelt werden.

Zu diesem Zweck werden die Zustandssignale S und Steuersignale A aus den Trainingsdaten als Eingabesignale in die Eingabeschicht IN eingespeist und durch die Schichten IN, H und OUT verarbeitet. Die verarbeiteten Daten werden schließlich von der Ausgabeschicht OUT als Ausgabesignale OA ausgegeben, die die eingespeisten Steuersignale A gemäß Trainingsziel möglichst genau reproduzieren sollen. Vorzugsweise werden Zustandssignale S auch der verdeckten Schicht H zugeführt.

Insofern die Eingabesignale, hier S und A, gewissermaßen durch die kleinere verdeckte Schicht H hindurch müssen und aus der dort vorliegenden, geringeren oder reduzierten Datenmenge gemäß Trainingsziel wieder weitgehend rekonstruierbar sein sollen, erhält man in der verdeckten Schicht H eine datenreduzierte Repräsentation der Eingabesignale. Der variationale Autoencoder VAE lernt auf diese Weise eine effiziente Codierung bzw. Komprimierung der Eingabesignale. Indem auch Zustandssignale S direkt in die verdeckte Schicht H eingespeist werden, kann erreicht werden, dass speziell die Steuersignale A in der verdeckten Schicht H effektiver codiert bzw. reduziert oder repräsentiert werden.

In der verdeckten Schicht H wird durch das Training ein sogenannter latenter Parameterraum oder eine latente Repräsentation insbesondere der Steuersignale A bzw. der hierdurch spezifizierten Steueraktionen realisiert. Die in der verdeckten Schicht H vorliegenden Daten korrespondieren zu einer abstrakten und informationsreduzierten Darstellung der in den Trainingsdaten enthaltenen zustandsspezifischen Steueraktionen.

Zum Erreichen des obigen Trainingsziels wird ein Optimierungsverfahren ausgeführt, das Verarbeitungsparameter des variationalen Autoencoders VAE derart einstellt, dass der Reproduktionsfehler DR minimiert wird. Als Reproduktionsfehler bzw. Reproduktionsunsicherheit DR kann hierbei insbesondere ein Abstand zwischen den Ausgabesignalen OA und den eingespeisten Steuersignalen A ermittelt werden, gemäß DR = (OA - A)².

Zum Trainieren des variationalen Autoencoders VAE bzw. zum Optimieren seiner Verarbeitungsparameter werden die berechneten Abstände DR - wie in Figur 3 durch einen strichlierten Pfeil angedeutet - zum variationalen Autoencoder VAE zurückgeführt. Zur konkreten Durchführung des Trainings kann auf eine Vielzahl von effizienten Standardverfahren zurückgegriffen werden.

Nach einem erfolgreichen Training kann mittels des trainierten variationalen Autoencoders VAE ein beliebiges Paar aus einem jeweiligen Zustandssignale S und einem jeweiligen Steuersignal A dahingehend bewertet werden, wie gut sich das jeweilige Steuersignal A aus der informationsreduzierten Darstellung in der verdeckten Schicht H rekonstruieren lässt. Es ist zu erwarten, dass häufig in den Trainingsdaten vorkommende Zustands-Steueraktions-Paare einen geringeren Reproduktionsfehler DR aufweisen als selten in den Trainingsdaten vorkommende Zustands-Steueraktions-Paare. Der Reproduktionsfehler DR des trainierten variationalen Autoencoders VAE kann also als Maß dafür verwendet werden, wie gut ein jeweiliges Zustands-Steueraktions-Paar durch die Trainingsdaten abgedeckt ist, bzw. wie häufig oder wie wahrscheinlich es dort vorkommt, bzw. wie stark es von dem vorgegebenen Steuerablauf SP abweicht.

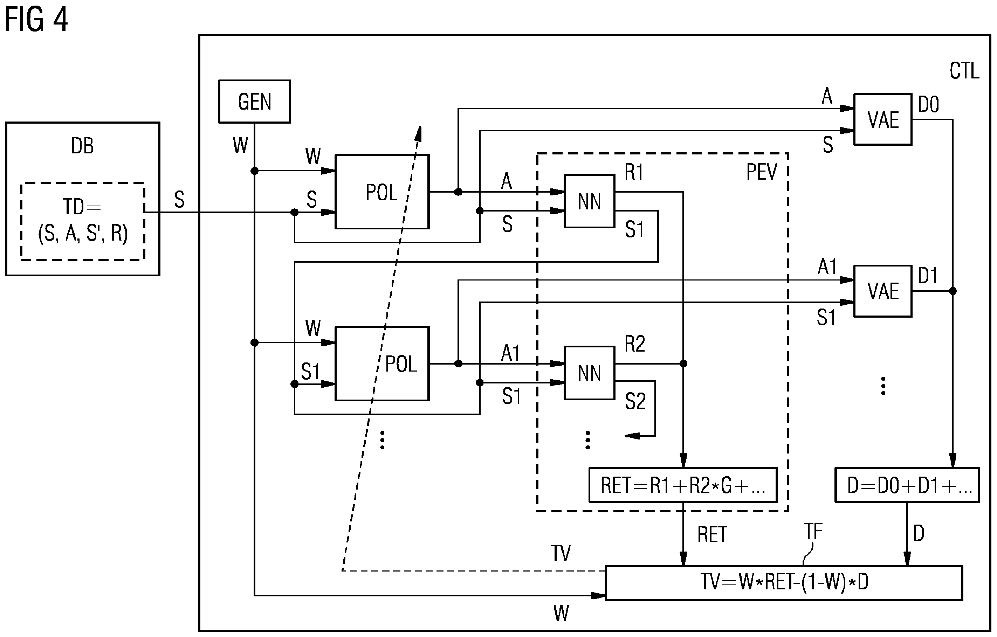

Figur 4 veranschaulicht ein Training des Steuerungsagenten POL mittels des trainierten Transitionsmodells NN sowie des trainierten Aktionsbewerters VAE. Zur Illustration aufeinanderfolgender Arbeitsschritte sind in Figur 4 jeweils mehrere Instanzen des Steuerungsagenten POL, des trainierten Transitionsmodells NN sowie des trainierten variationalen Autoencoders VAE dargestellt. Die verschiedenen Instanzen können insbesondere verschiedenen Aufrufen oder Auswertungen von Routinen entsprechen, mittels derer der Steuerungsagent POL, das trainierte Transitionsmodell NN bzw. der trainierte Aktionsbewerter VAE implementiert ist.

Wie oben bereits erwähnt, soll der Steuerungsagent POL darauf trainiert werden, zu einem jeweiligen Zustandssignal S der Maschine M ein Steuersignal A auszugeben, das einerseits hinsichtlich einer resultierenden Performanz der Maschine M sowie andererseits hinsichtlich einer Nähe zum bzw. einer Abweichung vom vorgegebenen Steuerablauf SP optimiert ist. Offensichtlich kann die Nähe zum vorgegebenen Steuerablauf SP auch durch eine negativ gewichtete Abweichung vom vorgegeben Steuerablauf SP dargestellt werden und umgekehrt. Die Optimierung zielt dabei auf höhere Performanz und größere Nähe zum bzw. kleinere Abweichung vom vorgegebenen Steuerablauf SP ab. Die Gewichtung der beiden Optimierungskriterien Performanz und Nähe bzw. Abweichung soll durch einen Gewichtswert W einstellbar sein.

Für das vorliegende Ausführungsbeispiel sei angenommen, dass der Gewichtswert W zwischen 0 und 1 einstellbar ist. Bei einem Gewichtswert von W=1 soll durch den trainierten Steuerungsagenten POL ein ausschließlich die Performanz optimierendes Steuersignal ausgegeben werden, während bei einem Gewichtswert von W=0 ein ausschließlich die Abweichung vom vorgegebenen Steuerablauf SP minimierendes Steuersignal ausgegeben werden soll. Bei Gewichtswerten zwischen 0 und 1 sollen die beiden Optimierungskriterien entsprechend anteilig gewichtet werden.

Zum Training des Steuerungsagenten POL für unterschiedliche Gewichtswerte werden durch einen Generator GEN der Steuereinrichtung CTL eine Vielzahl von Gewichtswerten W vorzugsweise zufallsbasiert erzeugt. Im vorliegenden Ausführungsbeispiel liegen die generierten Gewichtswerte W im Intervall von 0 bis 1.

Die vom Generator GEN erzeugten Gewichtswerte W werden erfindungsgemäß sowohl in den zu trainierenden Steuerungsagenten POL als auch in eine durch das Training zu optimierende Zielfunktion TF eingespeist.

Weiterhin werden zum Training des Steuerungsagenten POL Zustandssignale S aus der Datenbank DB in großer Menge als Eingabesignale in den Steuerungsagenten POL eingespeist.

Parallel dazu werden die Zustandssignale S auch in das trainierte Transitionsmodell NN sowie in den trainierten Aktionsbewerter VAE als Eingabesignale eingespeist.

Ein jeweiliges Zustandssignal S spezifiziert dabei jeweils einen Zustand der Maschine M. Anhand des jeweiligen Zustands werden durch das trainierte Transitionsmodell NN aus Anwendung von Steueraktionen resultierende Folgezustände der Maschine M vorhergesagt. Darüber hinaus werden der jeweilige Zustand sowie die daraus resultierenden Folgezustände durch den trainierten variationalen Autoencoder VAE bewertet.

Durch den Steuerungsagenten POL wird aus dem jeweiligen Zustandssignal S ein Ausgabesignal A abgeleitet und als Steuersignal ausgegeben. Das Steuersignal A wird dann zusammen mit dem jeweiligen Zustandssignal S in das trainierte Transitionsmodell NN eingespeist, das daraus einen Folgezustand vorhersagt und ein diesen spezifizierendes Folgezustandssignal S1 sowie einen zugehörigen Performanzwert R1 ausgibt.

Darüber hinaus wird das Steuersignal A zusammen mit dem jeweiligen Zustandssignal S in den trainierten variationalen Autoencoder VAE eingespeist, der daraus einen Reproduktionsfehler D0 für das Steuersignal A ermittelt und ausgibt.

Das Folgezustandssignal S1 wird wiederum in den Steuerungsagenten POL eingespeist, der daraus ein Steuersignal A1 für den Folgezustand ableitet. Das Steuersignal A1 wird zusammen mit dem jeweiligen Folgezustandssignal S1 in das trainierte Transitionsmodell NN eingespeist, das daraus einen weiteren Folgezustand vorhersagt und ein diesen spezifizierendes Folgezustandssignal S2 sowie einen zugehörigen Performanzwert R2 ausgibt.

Darüber hinaus wird das Steuersignal A1 zusammen mit dem Folgezustandssignal S1 in den trainierten variationalen Autoencoder VAE eingespeist, der daraus einen Reproduktionsfehler D1 für das Steuersignal A1 ermittelt und ausgibt.

Wie oben schon erwähnt, können die Reproduktionsfehler D0 und D1 als Maß für eine Abweichung der Steuersignale A und A1 vom vorgegebenen Steuerablauf SP verwendet werden.

Die vorstehenden Verfahrensschritte können iterativ wiederholt werden, wobei Performanzwerte und Reproduktionsfehler für weitere Folgezustände ermittelt werden. Die Iteration kann bei Vorliegen einer Abbruchbedingung beendet werden, **z.B.** bei Überschreiten einer vorgegebenen Anzahl von Iterationen. Auf diese Weise kann eine mehrere Zeitschritte umfassende, von Folgezustand zu Folgezustand weiterschreitende, in die Zukunft extrapolierte Steuertrajektorie mit zugehörigen Performanzwerten R1, R2, ... und Reproduktionsfehlern D0, D1, ... ermittelt werden. Eine solche Extrapolation wird häufig auch als Roll-Out oder virtueller Roll-Out bezeichnet.

Aus den Performanzwerten R1, R2, ... einer jeweiligen Steuertrajektorie wird eine über mehrere Zeitschritte kumulierte Gesamtperformanz RET dieser Steuertrajektorie ermittelt. Eine solche kumulierte Gesamtperformanz wird im Zusammenhang des bestärkenden Lernens häufig auch als Return bezeichnet. Die Gesamtperformanz RET wird vorzugsweise dem jeweiligen Zustandssignal S und/oder Steuersignal A am Anfang der jeweiligen Steuertrajektorie zugeordnet und bewertet so eine Fähigkeit des Steuerungsagenten POL zum jeweiligen Zustandssignal S ein Steuersignal A zu ermitteln, das eine über mehrere Zeitschritte performante Steuersequenz einleitet.

Zur Ermittlung der Gesamtperformanz RET werden die für zukünftige Zeitschritte ermittelten Performanzwerte R1, R2,... diskontiert, d.h. mit für jeden Zeitschritt kleiner werdenden Gewichten versehen. Im vorliegenden Ausführungsbeispiel wird die Gesamtperformanz RET als gewichtete Summe der Performanzwerte R1, R2, ... berechnet, deren Gewichte mit jedem Zeitschritt in die Zukunft mit einem Diskontierungsfaktor G < 1 multipliziert werden. Auf diese Weise kann die Gesamtperformanz RET ermittelt werden gemäß RET = R1 + R2*G + R3*G² + .... Für den Diskontierungsfaktor G kann z.B. ein Wert von 0,99, 0,9, 0,8 oder 0,5 eingesetzt werden.

Das Transitionsmodell NN sowie das vorstehende Diskontierungsverfahren bilden zusammen einen Performanzbewerter PEV, der anhand von Steuersignalen A, A1,... und Zustandssignalen S, S1,... eine aus Anwendung der Steuersignale resultierende Gesamtperformanz RET der Maschine M ermittelt.

Alternativ oder zusätzlich kann der Performanzbewerter PEV auch mittels eines Q-learning-Verfahrens realisiert und darauf trainiert werden, die über einen zukünftigen Zeitraum kumulierte Gesamtperformanz RET zu ermitteln.

Weiterhin wird aus den Reproduktionsfehlern D0, D1, ... der jeweiligen Steuertrajektorie ein über mehrere Zeitschritte kumulierter Gesamt-Reproduktionsfehler D ermittelt. Letzterer dient im weiteren Verfahren als Maß für die Abweichung dieser Steuertrajektorie vom vorgegebenen Steuerablauf SP. Im vorliegenden Ausführungsbeispiel wird der Gesamt-Reproduktionsfehler D als Summe über die einzelnen Reproduktionsfehler D0, D1, ... ermittelt gemäß D = D1 + D2 + ....

Die jeweils ermittelte Gesamtperformanz RET und der jeweils ermittelte Gesamt-Reproduktionsfehler D werden zusammen in die zu optimierende Zielfunktion TF eingespeist.

Durch die Zielfunktion TF werden die jeweils ermittelte Gesamtperformanz RET und der jeweils ermittelte Gesamt-Reproduktionsfehler D gemäß dem gleichen jeweiligen Gewichtswert W gewichtet, der auch zusammen mit dem jeweiligen Zustandssignal S in den Steuerungsagenten POL eingespeist wurde. Durch ein die Zielfunktion TF optimierendes Training kann der Steuerungsagent POL also darauf trainiert werden, bei Eingabe eines Zustandssignals und eines Gewichtswerts ein Steuersignal auszugeben, das die Zielfunktion TF gemäß dem eingegebenen Gewichtswert zumindest im Mittel optimiert.

Im vorliegenden Ausführungsbeispiel ermittelt die Zielfunktion TF aus einer jeweiligen Gesamtperformanz RET, einem jeweiligen Gesamt-Reproduktionsfehler D sowie einem jeweiligen Gewichtswert W einen jeweiligen Zielwert TV gemäß TV = W*RET - (1-W)*D. Insofern angestrebt wird, dass die Steuertrajektorie dem vorgegebenen Steuerablauf SP möglichst nahe ist, geht der Gesamt-Reproduktionsfehler D in den Zielwert TV mit negativem Vorzeichen ein. Gegebenenfalls kann die Gesamtperformanz RET und/oder der Gesamt-Reproduktionsfehler D vor Berechnung des Zielwerts TV noch mit einem jeweils konstanten Normierungsfaktor versehen werden.

Der jeweils ermittelte Zielwert TV wird vorzugsweise dem jeweiligen Zustandssignal S und/oder Steuersignal A am Anfang der jeweiligen Steuertrajektorie zugeordnet. Der jeweilige Zielwert TV bewertet so eine aktuelle Fähigkeit des Steuerungsagenten POL zum jeweiligen Zustandssignal S eine gemäß dem Gewichtswert W sowohl performanzoptimierende als auch dem vorgegebenen Steuerablauf SP nahe Steuersequenz einzuleiten.

Zum Trainieren des Steuerungsagenten POL, d.h. zum Optimieren seiner Verarbeitungsparameter werden die ermittelten Zielwerte TV - wie in Figur 4 durch einen strichlierten Pfeil angedeutet - zum Steuerungsagenten POL zurückgeführt. Die Verarbeitungsparameter des Steuerungsagenten POL werden dabei so eingestellt bzw. konfiguriert, dass die Zielwerte TV zumindest im Mittel maximiert werden. Zur konkreten Durchführung des Trainings kann dabei auf eine Vielzahl von effizienten Standardverfahren, insbesondere des bestärkenden Lernens zurückgegriffen werden.

Nach erfolgreichem Training des Steuerungsagenten POL kann dieser, wie im Zusammenhang mit Figur 1 beschrieben, zum optimierten Steuern der Maschine M verwendet werden. Dabei kann die Gewichtung der Optimierungskriterien Performanz und Nähe zum vorgegebenen Steuerablauf SP auf einfache Weise im laufenden Betrieb eingestellt und verändert werden. Auf diese Weise kann die Steuerung der Maschine M je nach Betriebsanforderung oder Betriebsphase darauf abgestimmt werden, ob eher die Performanz oder die Zuverlässigkeit höher gewichtet werden soll.

## Patentansprüche

1. Computerimplementiertes Verfahren zum Steuern einer Maschine (M) mittels eines lernbasierten Steuerungsagenten (POL), wobei
a) ein Performanzbewerter (PEV) bereitgestellt wird, der anhand eines Steuersignals (A, A1) eine Performanz (RET) für ein Steuern der Maschine (M) mittels des Steuersignals (A, A1) ermittelt, wobei die Performanz (RET) eine Leistung, einen Wirkungsgrad, einen Ressourcenverbrauch, eine Ausbeute, einen Schadstoffausstoß, eine Produktqualität und/oder andere Betriebsparameter der Maschine (M) betrifft,
b) ein Aktionsbewerter (VAE) bereitgestellt wird, der anhand des Steuersignals (A, A1) eine Abweichung (D) von einem vorgegebenen Steuerablauf (SP) ermittelt,
c) eine Vielzahl von Gewichtswerten (W) zum Gewichten der Performanz (RET) gegenüber der Abweichung (D) generiert wird,
d) eine Vielzahl von Zustandssignalen (S, S1) sowie die Gewichtswerte (W) in den Steuerungsagenten (POL) eingespeist werden, wobei
- ein jeweils resultierendes Ausgabesignal (A, A1) des Steuerungsagenten (POL) als Steuersignal in den Performanzbewerter (PEV) sowie in den Aktionsbewerter (VAE) eingespeist wird,
- eine vom Performanzbewerter (PEV) jeweils ermittelte Performanz (RET) gegenüber einer vom Aktionsbewerter (VAE) jeweils ermittelten Abweichung (D) gemäß dem jeweiligen Gewichtswert (W) durch eine Zielfunktion (TF) gewichtet wird, und
- der Steuerungsagent (POL) darauf trainiert wird, anhand eines Zustandssignals (S, S1) und eines Gewichtswerts (W) ein die Zielfunktion (TF) optimierendes Steuersignal (A, A1) auszugeben, und
e) zum Steuern der Maschine (M)
- ein Betriebs-Gewichtswert (WO) und ein Betriebs-Zustandssignal (SO) der Maschine (M) in den trainierten Steuerungsagenten (POL) eingespeist werden, und
- ein resultierendes Ausgabesignal (AO) des trainierten Steuerungsagenten (POL) der Maschine (M) zugeführt wird, und wobei
der Gewichtswert (W) beim Steuern der Maschine (M) sukzessive derart verändert wird, dass die Performanz (RET) gegenüber der Abweichung (D) in zunehmendem Maße höher gewichtet wird.

2. Verfahren nach Anspruch 1, **dadurch gekennzeichnet,**
**dass** die Ermittlung einer jeweiligen Performanz (RET) durch den Performanzbewerter (PEV) und/oder die Ermittlung einer jeweiligen Abweichung (D) durch den Aktionsbewerter (VAE) anhand eines jeweiligen Zustandssignals (S, S1) erfolgt.

3. Verfahren nach einem der vorhergehenden Ansprüche, **dadurch gekennzeichnet,**
**dass** für eine Vielzahl von Zustandssignalen (S) und Steuersignalen (A) jeweils ein Performanzwert (R) eingelesen wird, der eine aus Anwendung eines jeweiligen Steuersignals (A) auf einen durch ein jeweiliges Zustandssignal (S) spezifizierten Zustand der Maschine (M) resultierende Performanz quantifiziert,
**dass** der Performanzbewerter (PEV) darauf trainiert wird, anhand eines Zustandssignals (S) und eines Steuersignals (A) einen zugehörigen Performanzwert (R) zu reproduzieren.

4. Verfahren nach einem der vorhergehenden Ansprüche, **dadurch gekennzeichnet,**
**dass** der Performanzbewerter (PEV) mittels eines Q-learning-Verfahrens und/oder eines anderen Q-Funktionsbasierten Verfahrens des bestärkenden Lernens darauf trainiert wird, eine über einen zukünftigen Zeitraum kumulierte Performanz (RET) zu ermitteln.

5. Verfahren nach einem der vorhergehenden Ansprüche, **dadurch gekennzeichnet,**
**dass** eine Vielzahl von Zustandssignalen (S) und Steuersignalen (A) eingelesen wird,
**dass** der Aktionsbewerter (VAE) darauf trainiert wird, anhand eines Zustandssignals (S) und eines Steuersignals (A) nach einer Informationsreduktion das Steuersignal (A) zu reproduzieren, wobei ein Reproduktionsfehler (DR) ermittelt wird, und
**dass** die Abweichung (D) anhand des Reproduktionsfehlers (DR) ermittelt wird.

6. Verfahren nach einem der vorhergehenden Ansprüche, **dadurch gekennzeichnet,**
**dass** die Abweichung (D) durch den Aktionsbewerter (VAE) mittels eines variationalen Autoencoders, mittels eines Autoencoders, mittels generativer gegnerischer Netze und/oder durch einen insbesondere zustandssignalabhängigen Vergleich mit vorgegebenen Steuersignalen ermittelt wird.

7. Verfahren nach einem der vorhergehenden Ansprüche, **dadurch gekennzeichnet,**
**dass** die Generierung der Gewichtswerte (W) zufallsbasiert erfolgt.

8. Verfahren nach einem der vorhergehenden Ansprüche, **dadurch gekennzeichnet, dass**
zu einem Training des Steuerungsagenten (POL), des Performanzbewerters (PEV) und/oder des Aktionsbewerters (VAE) ein gradientenbasiertes Optimierungsverfahren, ein stochastisches Optimierungsverfahren, eine Partikelschwarmoptimierung und/oder ein genetisches Optimierungsverfahren verwendet wird.

9. Verfahren nach einem der vorhergehenden Ansprüche, **dadurch gekennzeichnet,**
**dass** der Steuerungsagent (POL), der Performanzbewerter (PEV) und/oder der Aktionsbewerter (VAE) ein künstliches neuronales Netz, ein rekurrentes neuronales Netz, ein faltendes neuronales Netz, ein mehrlagiges Perzeptron, ein bayessches neuronales Netz, einen Autoencoder, einen variationalen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfasst.

10. Verfahren nach einem der vorhergehenden Ansprüche,
**dadurch gekennzeichnet,**
**dass** die Maschine (M) ein Roboter, ein Motor, eine Fertigungsanlage, eine Fabrik, eine Energieversorgungseinrichtung, eine Gasturbine, eine Windturbine, eine Dampfturbine, eine Fräsmaschine oder ein anderes Gerät oder eine andere Anlage ist.

11. Steuereinrichtung (CTL) zum Steuern einer Maschine (M), eingerichtet zum Ausführen eines Verfahrens nach einem der vorhergehenden Ansprüche.

12. Computerprogrammprodukt eingerichtet zum Ausführen eines Verfahrens nach einem der Ansprüche 1 bis 10.

13. Computerlesbares Speichermedium mit einem Computerprogrammprodukt nach Anspruch 12.

## Claims

1. Computer-implemented method for controlling a machine (M) by means of a learning-based control agent (POL), wherein
a) a performance evaluator (PEV) is provided and uses a control signal (A, A1) to determine a performance (RET) for controlling the machine (M) by means of the control signal (A, A1), wherein the performance (RET) relates to a power, an efficiency, a resource consumption, a yield, a pollutant emission, a product quality and/or other operating parameters of the machine (M),
b) an action evaluator (VAE) is provided and uses the control signal (A, A1) to determine a deviation (D) from a predefined control sequence (SP),
c) a multiplicity of weight values (W) for weighting the performance (RET) with respect to the deviation (D) are generated,
d) a multiplicity of state signals (S, S1) and the weight values (W) are fed into the control agent (POL), wherein
- a respectively resulting output signal (A, A1) from the control agent (POL) is fed as a control signal into the performance evaluator (PEV) and into the action evaluator (VAE),
- a performance (RET) respectively determined by the performance evaluator (PEV) is weighted with respect to a deviation (D) respectively determined by the action evaluator (VAE) by a target function (TF) according to the respective weight value (W), and
- the control agent (POL) is trained to use a state signal (S, S1) and a weight value (W) to output a control signal (A, A1) optimizing the target function (TF), and
e) in order to control the machine (M)
- an operating weight value (WO) and an operating state signal (SO) from the machine (M) are fed into the trained control agent (POL), and
- a resulting output signal (AO) from the trained control agent (POL) is supplied to the machine (M), and wherein
the weight value (W) is gradually changed when controlling the machine (M) in such a manner that the performance (RET) is increasingly given a higher weighting with respect to the deviation (D).

2. Method according to Claim 1, **characterized**
**in that** a respective performance (RET) is determined by the performance evaluator (PEV) and/or a respective deviation (D) is determined by the action evaluator (VAE) on the basis of a respective state signal (S, S1).

3. Method according to one of the preceding claims, **characterized**
**in that** a performance value (R) is respectively read in for a multiplicity of state signals (S) and control signals (A) and quantifies a performance resulting from application of a respective control signal (A) to a state of the machine (M) specified by a respective state signal (S),
**in that** the performance evaluator (PEV) is trained to reproduce an associated performance value (R) on the basis of a state signal (S) and a control signal (A).

4. Method according to one of the preceding claims, **characterized**
**in that** the performance evaluator (PEV) is trained to determine a performance (RET) accumulated over a future period of time by means of a Q-learning method and/or another Q-function-based reinforcement learning method.

5. Method according to one of the preceding claims, **characterized**
**in that** a multiplicity of state signals (S) and control signals (A) are read in,
**in that** the action evaluator (VAE) is trained to use a state signal (S) and a control signal (A) to reproduce the control signal (A) following information reduction, wherein a reproduction error (DR) is determined, and
**in that** the deviation (D) is determined on the basis of the reproduction error (DR).

6. Method according to one of the preceding claims, **characterized**
**in that** the deviation (D) is determined by the action evaluator (VAE) by means of a variational autoencoder, by means of an autoencoder, by means of generative adversarial networks and/or by a comparison, in particular a state-signal-dependent comparison, with predefined control signals.

7. Method according to one of the preceding claims, **characterized**
**in that** the weight values (W) are generated in a randomized manner.

8. Method according to one of the preceding claims, **characterized in that**
a gradient-based optimization method, a stochastic optimization method, particle swarm optimization and/or a genetic optimization method is/are used to train the control agent (POL), the performance evaluator (PEV) and/or the action evaluator (VAE).

9. Method according to one of the preceding claims, **characterized**
**in that** the control agent (POL), the performance evaluator (PEV) and/or the action evaluator (VAE) comprise(s) an artificial neural network, a recurrent neural network, a convolutional neural network, a multilayer perceptron, a Bayesian neural network, an autoencoder, a variational autoencoder, a deep learning architecture, a support vector machine, a data-driven trainable regression model, a k-nearest neighbour classifier, a physical model and/or a decision tree.

10. Method according to one of the preceding claims, **characterized**
**in that** the machine (M) is a robot, a motor, a manufacturing plant, a factory, an energy supply device, a gas turbine, a wind turbine, a steam turbine, a milling machine or another device or another installation.

11. Controller (CTL) for controlling a machine (M), configured to carry out a method according to one of the preceding claims.

12. Computer program product configured to carry out a method according to one of Claims 1 to 10.

13. Computer-readable storage medium having a computer program product according to Claim 12.

## Revendications

1. Procédé mis en œuvre par ordinateur pour la commande d'une machine (M) au moyen d'un agent de commande basé sur l'apprentissage (POL), dans lequel
a) il est fourni un évaluateur de performance (PEV) qui détermine, à l'aide d'un signal de commande (A, A1), une performance (RET) pour une commande de la machine (M) au moyen du signal de commande (A, A1), dans lequel la performance (RET) concerne une puissance, un degré d'efficacité, une consommation de ressources, un rendement, un rejet de substances polluantes, une qualité de produit et/ou d'autres paramètres de fonctionnement de la machine (M),
b) il est fourni un évaluateur d'action (VAE) qui détermine, à l'aide du signal de commande (A, A1), un écart (D) par rapport à un processus de commande (SP) prédéfini,
c) une pluralité de valeurs de pondération (W) pour la pondération de la performance (RET) par rapport à l'écart (D) est générée,
d) une pluralité de signaux d'état (S, S1), ainsi que les valeurs de pondération (W), sont injectées dans l'agent de commande (POL), dans lequel
- un signal de sortie respectivement résultant (A, A1) de l'agent de commande (POL) est injecté en tant que signal de commande dans l'évaluateur de performance (PEV) ainsi que dans l'évaluateur d'action (VAE),
- une performance (RET) déterminée respectivement par l'évaluateur de performance (PEV) est pondérée par rapport à un écart (D) déterminé respectivement par l'évaluateur d'action (VAE) selon la valeur de pondération (W) respective par le biais d'une fonction cible (TF), et
- l'agent de commande (POL) est entraîné pour émettre en sortie, à l'aide d'un signal d'état (S, S1) et d'une valeur de pondération (W), un signal de commande (A, A1) optimisant la fonction cible (TF), et
e) pour la commande de la machine (M)
- une valeur de pondération de fonctionnement (WO) et un signal d'état de fonctionnement (SO) de la machine (M) sont injectés dans l'agent de commande (POL) entraîné, et
- un signal de sortie résultant (AO) de l'agent de commande (POL) entraîné est introduit dans la machine (M), et dans lequel la valeur de pondération (W) est modifiée progressivement lors de la commande de la machine (M) de telle sorte que la performance (RET) soit pondérée de manière croissante par rapport à l'écart (D).

2. Procédé selon la revendication 1, **caractérisé**
**en ce que** la détermination d'une performance (RET) respective s'effectue par le biais de l'évaluateur de performance (PEV) et/ou la détermination d'un écart (D) respectif s'effectue par le biais de l'évaluateur d'action (VAE) à l'aide d'un signal d'état (S, S1) respectif.

3. Procédé selon l'une des revendications précédentes, **caractérisé**
**en ce qu'**est lue, pour une pluralité de signaux d'état (S) et de signaux de commande (A), respectivement une valeur de performance (R) qui quantifie une performance résultant d'un état de la machine (M) spécifié par le biais d'un signal d'état (S) respectif par application d'un signal de commande (A) respectif,
**en ce que** l'évaluateur de performance (PEV) est entraîné pour reproduire une valeur de performance (R) correspondante à l'aide d'un signal d'état (S) et d'un signal de commande (A).

4. Procédé selon l'une des revendications précédentes, **caractérisé**
**en ce que** l'évaluateur de performance (PEV) est entraîné, au moyen d'un procédé d'apprentissage Q (« *Q-learning* ») et/ou d'un autre procédé basé sur la fonction Q de l'apprentissage par renforcement, pour déterminer une performance (RET) cumulée sur une période de temps future.

5. Procédé selon l'une des revendications précédentes, **caractérisé**
**en ce qu'**une pluralité de signaux d'état (S) et de signaux de commande (A) est lue,
**en ce que** l'évaluateur d'action (VAE) est entraîné, à l'aide d'un signal d'état (S) et d'un signal de commande (A), pour reproduire le signal de commande (A) après une réduction de l'information, dans lequel une erreur de reproduction (DR) est déterminée, et
**en ce que** l'écart (D) est déterminé à l'aide de l'erreur de reproduction (DR).

6. Procédé selon l'une des revendications précédentes, **caractérisé**
**en ce que** l'écart (D) est déterminé par le biais de l'évaluateur d'action (VAE) au moyen d'un auto-encodeur variationnel, au moyen d'un auto-encodeur, au moyen de réseaux adverses génératifs et/ou par le biais d'une comparaison dépendant en particulier des signaux d'état avec des signaux de commande prédéfinis.

7. Procédé selon l'une des revendications précédentes, **caractérisé**
**en ce que** la génération des valeurs de pondération (W) s'effectue de manière aléatoire.

8. Procédé selon l'une des revendications précédentes, **caractérisé**
**en ce que**, pour un entraînement de l'agent de commande (POL), de l'évaluateur de performance (PEV) et/ou de l'évaluateur d'action (VAE), un procédé d'optimisation basé sur le gradient, un procédé d'optimisation stochastique, une optimisation par essaim de particules et/ou un procédé d'optimisation génétique sont utilisés.

9. Procédé selon l'une des revendications précédentes, **caractérisé**
**en ce que** l'agent de commande (POL), l'évaluateur de performance (PEV) et/ou l'évaluateur d'action (VAE) comportent un réseau neuronal artificiel, un réseau neuronal récurrent, un réseau neuronal convolutif, un perceptron multicouche, un réseau neuronal bayésien, un auto-encodeur, un auto-encodeur variationnel, une architecture d'apprentissage profond (« *Deep-Learning* »)*,* une machine à vecteurs de support, un modèle de régression entraînable sur la base de données, un classificateur des k plus proches voisins, un modèle physique et/ou un arbre décisionnel.

10. Procédé selon l'une des revendications précédentes, **caractérisé**
**en ce que** la machine (M) est un robot, un moteur, une installation de fabrication, une usine, un dispositif d'alimentation en énergie, une turbine à gaz, une éolienne, une turbine à vapeur, une machine de fraisage ou un autre appareil ou une autre installation.

11. Dispositif de commande (CTL) pour la commande d'une machine (M), conçu pour l'exécution d'un procédé selon l'une des revendications précédentes.

12. Produit de programme informatique conçu pour l'exécution d'un procédé selon l'une des revendications 1 à 10.

13. Support de stockage lisible par ordinateur avec un produit de programme informatique selon la revendication 12.
